# EUROPEAN PATENT SPECIFICATION

(11) **EP 0 623 705 B1**
(45) Date of publication and mention of the grant of the patent: **15.07.1998**
(21) Application number: 94303222.7
(22) Date of filing: 04.05.1994
(51) Int. Cl.: E01B 9/10, F16B 31/02

(54) **Fastener assemblies for railway rails**
Schienenbefestigungssysteme
Ensemble de fixation pour rail de chemin de fer

(30) Priority: 05.05.1993 GB 9309241
(43) Date of publication of application: 09.11.1994
(73) Proprietor: ASTRAL ENTERPRISE LIMITED, Grand Turk (TC)
(72) Inventor: Henry, Hugh Richard, Alderney, Channel Islands (GB)
(74) Representative: Carpmael, John William Maurice

(56) References cited:
- EP-A- 0 517 665
- BE-A- 549 987
- GB-A- 1 144 465
- US-A- 4 020 734

## Description

This invention relates to fastener assemblies, in particular fastener assemblies employing threaded, large headed screws by means of which railway rails or railway chairs or baseplates are fastened to railway sleepers.

In a large number of countries, many railway sleepers are made from wood, or concrete with wooden or plastic inserts. Fixings such as baseplates are then fastened to the sleepers by means of screws which are inserted into a narrow bore made in the wood or plastic and tightened mechanically or manually so that a thread to receive the screw forms in the wooden or plastic bore. In other constructions, a fastening clip is used to hold the rail on a baseplate, using a screw which engages within the sleeper.

Because the screw is usually secured in place in a sleeper with a large wrench, power impact wrench or driver, applying substantial torque, the screw is liable to be overtightened. This can lead to thread damage, and in extreme cases stripping of the thread formed in the sleeper so that pull-out strength is greatly diminished.

The usual solution to this problem is to use specialised equipment to pre-set and limit the torque to be applied to the screw. However, the technology is only as good as the condition of the equipment and the quality of labour which is not always assured.

BE-A-549987 discloses a method of fitting screws into "artificial" wooden panels e.g. sheets of chipboard made of compressed wood shavings, such as are used in the manufacture of furniture, wherein the chamfered head of the screw and a co-operating countersink hole in a hinge, washer or the like to be connected to the panel, are provided with inter engaging teeth to prevent the screw from being screwed down too far into the panel, which is relatively soft, and thus, easily damaged. In the method disclosed, where the co-operating teeth interengage, which happens suddenly, it is impossible to turn the screw any further, and thus the screw cannot damage the chipboard panel.

This method suffers from the disadvantage that there is a predetermined limit governing the amount by which the screw can be inserted, and such a system would be wholly unsuited for use in connecting railway rails to railway sleepers.

According to the present invention, there is provided a fastener assembly for fastening a railway rail to a railway sleeper, comprising a screw and a base member, each of which is provided with co-operating means, and spring means which is deformable by rotation of the screw into the sleeper to allow the co-operating means to move into interlocking engagement with each other either directly, or via an intermediate member, to prevent further rotation of the screw.

Typically the screw comprises a head portion and a threaded shank for engaging a threaded bore in the railway sleeper, and the base member comprises a baseplate having an aperture through which the threaded shank of the screw passes, there being at least one and preferably at least three depending lugs on the underside of the head portion forming the co-operating means on said screw.

In one embodiment, the resilient member comprises a resilient deformable washer which is located between the base member and the head portion of the screw, and the co-operating means on the baseplate comprises at least one ramp, but preferably a plurality of ramps which are separated by steps disposed around the aperture in the base member, and which is/are arranged so that as the screw is tightened, it/they will progressively resist the turning motion of the screw, until positive engagement or interlock occurs.

In such a case, the washer may be of flexible plastic and may have an aperture therein in which the co-operating means of the screw may be seated.

In an alternative embodiment, the spring means, which mediate the interaction between the cooperating means which limit torque is in the form of a deformable spring steel device.

The spring steel device may comprise a distorted helical spring, which is constructed so that its end portions and hence its two end faces diverge when the spring is compressed, and which is arranged between the cooperating means.

In use, tightening of the screw compresses the spring and causes its end faces to diverge, one into contact with the screw co-operating means and the other into contact with the base member co-operating means, thus preventing further tightening of the screw.

The baseplate may be newly manufactured to incorporate the co-operating means with which it is to be provided, e.g. a plurality of ramps formed on its surface. These may suitably be made by casting, forging, moulding or stamping.

Alternatively, such co-operating means, e.g. ramps, may be provided on a separate fitting, such as a metal plate, or washer, e.g. of steel. This has the advantage that it can be used with existing baseplates, and fitted, e.g. during maintenance operations. It is possible to use a separate ramped plate or washer with a baseplate of uneven surface, such as is used on Spanish railway systems, by levelling the uneven surface with a spacer block, e.g. of resilient material, located between the baseplate and the plate or washer.

As an alternative to the distorted helical spring, a deformable washer formed of two back-to-back deformed annular spring steel discs may be used, each disc having a shallow U-shape when viewed from one edge, with the convex faces of the discs in abutting relationship just at the base of the U-shape, there being abutments on each concave face of the discs which form co-operating means for engaging with the lug on the screw and the co-operating means on the base member.

Preferably, each disc is circular and is deformed symmetrically about a diametral line defining the base of the U, and the discs are symmetrical with each other. While it is envisaged that the two discs could be manufactured in one piece, and then hardened to give them their spring like properties, they could alternatively be formed separately and connected together in back-to-back relationship by two rivets passing through the discs and located on said diametral line, at least one end of each rivet projecting beyond the concave surface of the base of the U to provide said abutments.

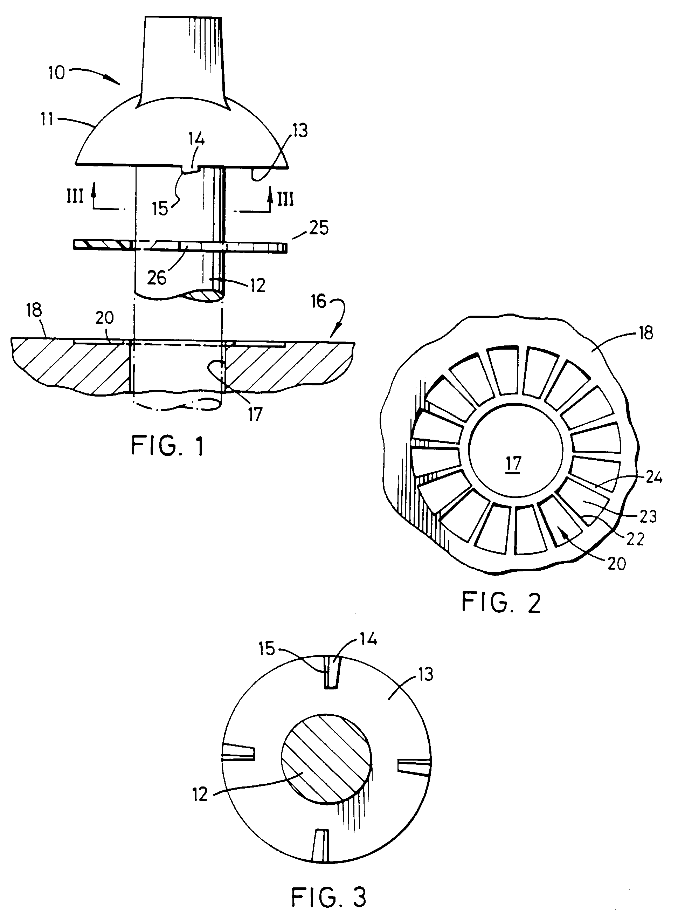

Three embodiments of the invention are now described by way of example only with reference to the accompanying drawings, in which:-
FIGURE 1 is an exploded sectional elevation of one embodiment of a fastener assembly, which incorporates a resilient washer;
FIGURE 2 is a partial plan view of a baseplate of Figure 1;
FIGURE 3 is a section on line III-III of Figure 1 but showing a modified screw;
FIGURE 4 shows an alternative embodiment of fastener assembly incorporating a spring steel device; and
FIGURES 5, 6 and 7 are respectively a plan view, side elevation and an end elevation of a third construction of spring means.

Referring to the drawings, a screw 10 for securing a base member in the form of a steel baseplate 16 to a sleeper (not shown) consists of a domed head 11 and a depending threaded shank 12. The screw head 11 is provided with a flattened underside 13, from the periphery of which one or more lugs 14, each having a chamfered lower edge 15 projects.

The baseplate 16 contains several circular bores, one of which is shown at 17 into which the threaded shank 12 of the screw 10 locates. The baseplate 16 has an upper surface 18 in which are formed a plurality of ramps or ratchet teeth 20 surrounding the bore 17, each of which extends generally radially outwards from the circumferential edge of the circular bore 17 and is separated from adjacent teeth by areas 24. Each tooth 20 consists of an upstanding vertical face or step 22 separated from an opposite, inclined face or ramp 23.

Located between the underside 13 of the screw head and the upper surface 18 of base plate 16 is a circular washer 25 of resilient, flexible plastic or like material. The washer 25 is provided at or adjacent its periphery with a bore or slot 26 which is shaped to receive the projecting lug 14 on the underside 13 of the screwhead 11.

In use, the screw 10 is pushed through the washer 25, such that the lug 14 locates in the bore 26. The screw is then placed into the bore 17 in the baseplate 16, so that the baseplate can be connected to a sleeper. As torque is applied in known manner, e.g. with a wrench or machine, to tighten screw 10 into the sleeper, the threaded shank 12 moves down through circular bore 17 of baseplate 16, and the underside 13 of the screw head, together with circular washer 25, moves towards baseplate 16, and compresses the washer 25. The projecting lug 14 approaches each tooth 20, and eventually the lug 14 abuts against one of the vertical faces 22 of the individual teeth 20, and the interaction between lug 14 and one of the teeth 20 counteracts the torque applied to the screw 10 and prevents it being screwed any further into the sleeper.

Instead of forming the ramps 23 directly on a face of the baseplate surrounding the aperture 17 in the baseplate, a ramped washer may be keyed to the baseplate. This could be located within a recess provided with a key.

Instead of only having one lug 14 on its face 13, the screw 10 may have at least three, and preferably four, equally spaced lugs 14 on its face 13.

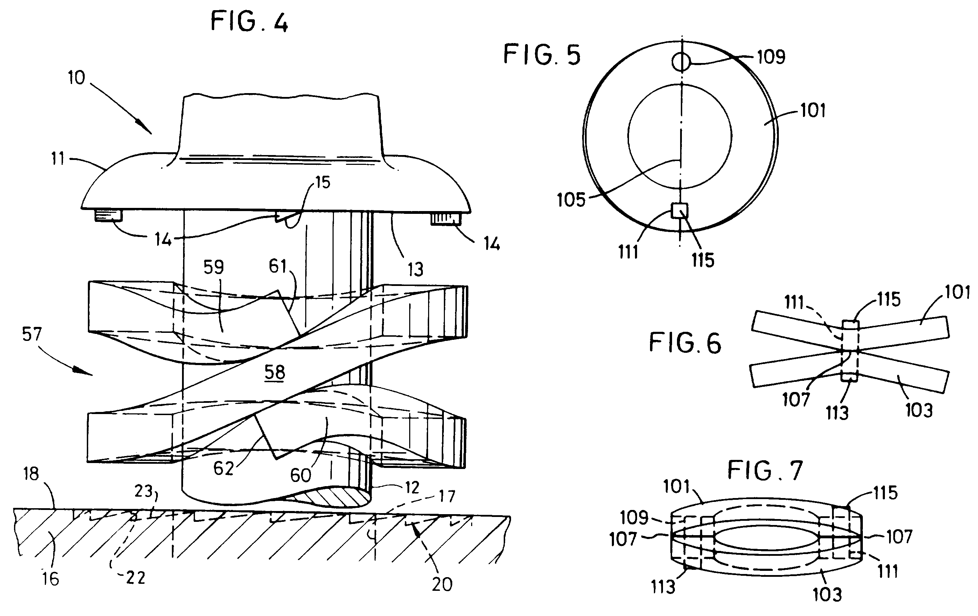

In the embodiment shown in Figure 4 a distorted helical metal spring 57 is placed between screw 10 and baseplate 16. The helical spring 57 is reverse wound and formed of hard spring steel and has a centre section 58 and at opposite ends, end portions are bent up, as shown at 59 and 60 respectively, and terminate in end faces 61, 62. The spring 57 is wound so that the end faces 61 and 62 move apart when centre section 58 is compressed in the axial direction, due to tightening of the screw 10.

In use, as the screw 10 is tightened down into a sleeper, and as it moves towards the baseplate 16, a compressive force is exerted by the screw head 11 on the spring centre section 58. The spring end faces 61 and 62 move apart as compression is increased, until the end face 61 contacts one of the wedge shaped lugs 14 on the screw head 11, and the end face 62 contacts one of the ramps 20. This has the effect of preventing further rotation of the screw 10.

In the embodiment shown in Figures 5-7 of the drawings, the spring means is formed of two deformed circular metal discs 101, 103 of generally rectangular cross-section, each of which is deformed about an imaginary diametral line 105, so as to have a shallow U-shape as shown in Figure 6, with the two U-shaped discs 101, 103 being abutted at their convex portions shown generally at 107, and held in abutting relationship by diametrically opposed rivets 109, 111, the rivet 109 projecting from one side of the spring means as shown in 113 and the rivet 111 projecting from the other side as shown at 115. (The rivets could alternatively each project from both sides of the spring means).

The spring means is used in the same way as the helical spring 57 shown in Figure 4, and when the spring means is compressed between a baseplate and the head of the screw, the two discs 101, 103 will tend to flatten out, until the projecting rivet portions 113 and 115 come into contact with one of the co-operating means, i.e. ramp 23 or lug 14 on the baseplate and underside of the head of the screw, respectively, to prevent further tightening of the screw.

It is envisaged that the spring means could be manufactured in one piece, or that the projecting rivet heads 113, 115 could be provided by alternative constructions of abutment or co-operating means for engaging lugs 14 and ramps 23.

It will of course be understood that the present invention has been described above purely by way of example, and modifications of detail can be made within the scope of the invention as defined in the claims.

## Claims

1. A fastener assembly for fastening a railway rail to a railway sleeper, comprising a screw (10) and a base member (16), characterised in that the screw (10) and base member (16) are provided with co-operating means (14,20) and including spring means (25,57 or 101) which is deformable by rotation of the screw (10) into the sleeper to allow the co-operating means (14,20) to move into interlocking engagement with each other, either directly or via an intermediate member (57 or 101), to prevent further rotation of the screw (10).

2. An assembly according to claim 1 in which the screw (10) comprises a head portion (11) and a threaded shank (12) for engaging a bore in the railway sleeper and the base member (16) has an aperture (17) through which the threaded shank (12) of the screw (10) passes, there being at least one depending lug (14) on the underside of the head portion (11) forming the co-operating means on said screw (10).

3. An assembly according to claim 1 or 2, in which the co-operating means (20) provided on the base member comprises a plurality of ramps (20) separated by steps (22) which are disposed around the aperture (17) in the base member (16) through which the screw (10) passes, the steps (22) between the ramps (20) and co-operating means (14) on the screw progressively moving into co-operating engagement to resist the turning motion of the screw (10) as the screw (10) is tightened and the spring means (25) is deformed.

4. An assembly according to claim 1, 2 or 3 in which the spring means comprises a washer (25) made of compressible resilient plastic.

5. An assembly according to claim 1, 2 or 3, in which the spring means comprises a distorted helical spring (57) provided with end faces (61,62) which move apart as the spring (57) is compressed, to contact the screw co-operating means (14) and the baseplate co-operating means (20) respectively.

6. An assembly according to claim 1, 2 or 3 wherein the spring means comprises a deformable washer (101) formed of two back-to-back deformed annular discs, each of which has a shallow U-shape when viewed from one edge, with the convex faces of the discs (101,103) in abutting relationship just at the base of the U-shape, there being abutments (109,111,113,115) on each concave face of the discs (101,103) which form co-operating means for engaging with the co-operating means (14) on the screw (10) and the co-operating means (20) on the base member.

7. An assembly according to any one of claims 1-6 in which the co-operating means (20) on the base member are cast, forged, moulded or stamped into a base plate (16) for the railway rail.

8. An assembly according to any one of claims 1-6 in which the co-operating means on the base member are formed in a separate steel plate or washer for securing to a baseplate for the railway rail.

## Patentansprüche

1. Befestigungssystem zur Befestigung von Eisenbahnschienen an einer Eisenbahnschwelle, bestehend aus einer Schraube (10) und einem Bodenteil (16), dadurch gekennzeichnet, dass die Schraube (10) und das Bodenteil (16) mit zusammenwirkenden Mitteln (14, 20) versehen sind und Federmittel (25, 57 oder 101) umfassen, die durch eindrehen der Schraube (10) in die Schwelle verformbar sind, um zu ermöglichen, dass sich die zusammenwirkenden Mittel (14, 20) in einen verriegelden Eingriff miteinander hinein bewegen können, sei es direkt oder über ein Zwischenglied (57 oder 101) um eine weitere Verdrehung der Schraube (10) zu verhindern.

2. System nach Anspruch 1, wobei die Schraube (10) aus einem Kopfteil (11) und einem Gewindeschaft (12) besteht, um mit einer Bohrung in der Eisenbahnschwelle einzugreifen und wobei das Bodenteil (16) eine Öffnung (17) hat durch die der Gewindeschaft (12) der Schraube (10) hindurchgeht, wobei es an der Unterseite des Kopfteils (11) wenigstens einen zugehörigen Vorsprung (14) gibt, der das zusammenwirkende Mittel der Schraube (10) bildet.

3. System nach Anspruch 1 oder 2, wobei das auf dem Bodenteil vorgesehene zusammenwirkende Mittel (20) eine Anzahl von durch Stufen (22) voneinander getrennten Steigungen (20) aufweist, die rings um die Öffnung (17) im Bodenteil (16) durch das die Schraube (10) hindurchgeht, angeordnet sind, wobei die Stufen (22) zwischen den Steigungen (20) und dem zusammenwirkenden Mittel (14) an der Schraube progressiv in einen zusammenwirkenden Eingriff bewegen, um die Drehbewegung der Schraube (10) zu widerstehen, wenn die Schraube (10) angezogen wird und das Federmittel (25) verformt wird.

4. System nach Anspruch 1, 2 oder 3, wobei das Federmittel aus einer, aus zusammendrückbarem federndem Kunststoff hergestellten Unterlegscheibe (25) besteht.

5. System nach Anspruch 1, 2 oder 3, wobei das Federmittel aus einer verformten Schraubenfeder (57) besteht, welche mit zwei Endflächen (61, 62) versehen ist, die sich auseinander bewegen wenn die Feder (57) zusammengedrückt wird, um das mit der Schraube zusammenwirkende Mittel (14), beziehungsweise das mit der Bodenplatte zusammenwirkende Mittel zu berühren.

6. System nach Anspruch 1, 2 oder 3, wobei das Federmittel aus einer verformbaren Unterlegscheibe (101) besteht, welche aus zwei mit den Rückseiten gegen einander anliegenden verformten ringförmigen Scheiben gebildet ist, die beide, von einer Seite aus gesehen, flach U-förmig sind, mit den konvexen Flächen der Scheiben (101, 103), lediglich an der Basis der U-Form, gegen einander liegend, wobei es an jeder konkaven Fläche der Scheiben (101, 103) Widerlager (109, 111, 113, 115) gibt, welche ein zusammenwirkendes Mittel bilden, um in das zusammenwirkende Mittel (14) der Schraube (10) und das zusammenwirkende Mittel (20) auf dem Bodenteil einzugreifen.

7. System nach irgendeinem der Ansprüche 1 bis 6, wobei die zusammenwirkende Mittel (20) auf dem Bodenteil in einem Bodenteil (16) für Eisenbahnschienen eingegossen, eingeschmiedet, eingeformt oder eingepresst sind.

8. System nach irgendeinem der Ansprüche 1 bis 6, wobei die zusammenwirkende Mittel auf dem Bodenteil in einer separaten Stahlplatte oder Unterlegscheibe zur Befestigung an einer Bodenplatte für Eisenbahnschienen geformt sind.

## Revendications

1. Ensemble de fixation pour fixer un rail de chemin de fer sur une traverse de chemin de fer, comprenant un tire-fond (10) et un élément de base (16), caractérisé en ce que le tire-fond (10) et l'élément de base (16) sont équipés de moyens coopératifs (14, 20) et comprenant des moyens de ressort (25, 57 ou 101) qui sont déformables par rotation du tire-fond (10) dans la traverse afin de permettre aux moyens coopératifs (14, 20) de se déplacer par engagement à verrouillage réciproque, soit directement ou au moyen d'un élément intermédiaire (57 ou 101), pour empêcher une rotation ultérieure du tire-fond (10).

2. Ensemble selon la revendication 1 dans lequel le tire-fond (10) comprend une partie de tête (11) et une tige filetée (12) pour s'engager dans un alésage dans la traverse de chemin de fer et l'élément de base (16) présente une ouverture (17) à travers laquelle passe la tige filetée (12) du tire-fond (10), un ergot en saillie (14) étant au moins présent sur la face inférieure de la partie de tête (11) formant le moyen coopératif sur ledit tire-fond (10).

3. Ensemble selon la revendication 1 ou 2, dans lequel le moyen coopératif (20) installé sur l'élément de base comprend plusieurs rampes (20) séparées par des paliers (22) qui sont placées autour de l'ouverture (17) dans l'élément de base (16) à travers laquelle passe le tire-fond (10), les paliers (22) entre les rampes (20) et le moyen coopératif (14) sur le tire-fond se déplaçant progressivement en engagement coopératif pour s'opposer au mouvement tournant du tire-fond (10) à mesure que le tire-fond (10) est serré et que le moyen de ressort (25) est déformé.

4. Ensemble selon la revendication 1, 2 ou 3 dans lequel le moyen flexible comprend une rondelle (25) fabriquée en plastique élastique compressible.

5. Ensemble selon la revendication 1, 2 ou 3 dans lequel le moyen flexible comprend un ressort hélicoïdal déformé (57) doté de faces d'extrémité (61, 62) qui s'écartent à mesure que le ressort (57) est comprimé, pour entrer en contact avec respectivement le moyen coopératif du tire-fond (14) et le moyen coopératif de la plaque de base (20).

6. Ensemble selon la revendication 1, 2 ou 3 dans lequel le moyen flexible comprend une rondelle déformable (101) constituée de deux disques annulaires déformés agencés dos à dos, chacun d'eux ayant une forme en U peu profonde lorsque vu à partir d'un bord, avec les faces convexes des disques (101, 103) en relation jointive exactement à la base de la forme en U, des appuis (109, 111, 113, 115) étant présents sur chaque face concave des disques (101, 103) qui forment des moyens coopératifs pour engagement avec le moyen coopératif (20) sur l'élément de base.

7. Ensemble selon l'une quelconque des revendications 1 à 6 dans lequel les moyens coopératifs (20) sur l'élément de base sont coulés, forgés, moulés ou estampés dans une plaque de base (16) pour le rail de chemin de fer.

8. Ensemble selon l'une quelconque des revendications 1 à 6 dans lequel les moyens coopératifs sur l'élément de base sont formés dans une plaque ou rondelle en acier séparée pour être fixée à une plaque de base pour le rail de chemin de fer.
